# EUROPEAN PATENT APPLICATION

(11) **EP 4 835 527 A1**
(43) Date of publication of application: **04.11.2026**
(21) Application number: 24912359.7
(22) Date of filing: 10.12.2024
(51) Int. Cl.: G02B 6/255, G02B 6/02

(54) **FUSION SPLICING DEVICE AND FUSION SPLICING METHOD**

(30) Priority: 28.12.2023 JP 2023223130
(71) Applicant: Sumitomo Electric Industries, Ltd., Osaka-shi, Osaka 541-0041 (JP)
(72) Inventor: KUNIEDA Orie, Osaka-shi, Osaka 541-0041 (JP); MOURI Shintaro, Osaka-shi, Osaka 541-0041 (JP); KIMURA Akinori, Osaka-shi, Osaka 541-0041 (JP); ENDO Soichi, Osaka-shi, Osaka 541-0041 (JP)
(74) Representative: Müller-Boré & Partner Patentanwälte PartG mbB
(86) International application number: PCT/JP2024/043681
(87) International publication number: WO 2025/142470

(57) **Abstract**

A fusion splicing device according to one embodiment includes a rotation mechanism for rotating a first multicore fiber and a second multicore fiber; a first microscope that observes the first multicore fiber and the second multicore fiber by receiving light emitted from a first light source along a first direction; a second microscope that observes the first multicore fiber and the second multicore fiber by receiving light emitted from a second light source along a second direction; and a calculation unit that calculates an estimated loss from an image of the first multicore fiber and the second multicore fiber acquired by the first microscope and an image of the first multicore fiber and the second multicore fiber acquired by the second microscope.

## Description

### Technical Field

The present disclosure relates to a fusion splicing device and a fusion splicing method.

Priority is claimed on Japanese Patent Application No. 2023-223130, filed on December 28, 2023, the entire content of which is incorporated herein by reference.

### Background Art

Patent Literature 1 discloses a splice loss estimation method for an optical fiber. In the splice loss estimation method, a single-mode optical fiber in which a four-fiber ribbon is collectively fusion-spliced is measured by a power monitoring method. In this method, an axial misalignment amount is measured immediately before heat fusion, and the axial misalignment amount is further measured after the completion of heating. An estimated loss is calculated from a difference between these axial misalignment amounts. Non-Patent Literature 1 discloses a method for estimating a splice loss of an optical fiber from the outer shape of the optical fiber using Marcuse's loss equation.

Patent Literature 2 discloses a fusion splicing device. The fusion splicing device includes an optical fiber holder for holding an optical fiber; a rotation mechanism for rotating the optical fiber; a bending unit that bends the optical fiber; a light source that causes light to be incident on the optical fiber from a side; and a power supply unit that supplies power to the light source. The bending unit and the light source are disposed at any one of the following positions: a distal end side of the optical fiber relative to the optical fiber holder, the optical fiber holder, and the rotation mechanism.

Patent Literature 3 discloses a fusion splicing method for an optical fiber. In this fusion splicing method, optical fibers to be spliced are disposed with a predetermined spacing therebetween, and are subjected to main heating after being preheated by air discharge. The shape of the fusion-spliced cores is imaged, and the image is subjected to image processing. A splice loss is estimated from data obtained as a result of the image processing using the finite-difference beam propagation method (FD-BPM). In the FD-BPM, a comparison between a database created in advance and the data is performed.

### Citation List

### Patent Literature

Patent Literature 1: Japanese Unexamined Patent Publication No. H1-196531
Patent Literature 2: PCT International Publication No. WO 2022/244843
Patent Literature 3: Japanese Unexamined Patent Publication No. H9-138318

### Non Patent Literature

Non Patent Literature 1: D. Marcuse, "Loss Analysis of Single-Mode Fiber Splices", The Bell System Technical Journal, Vol. 56, No. 5, pp. 703-718 1977.

### Summary of Invention

A fusion splicing device according to the present disclosure fusion-splices a first multicore fiber having a plurality of first cores exposed on a first end face and a second multicore fiber having a plurality of second cores exposed on a second end face to each other. The fusion splicing device includes a rotation mechanism for rotating the first multicore fiber and the second multicore fiber fusion-spliced to each other; a first microscope that observes the first multicore fiber and the second multicore fiber by receiving light emitted from a first light source toward the first multicore fiber and the second multicore fiber along a first direction; a second microscope that observes the first multicore fiber and the second multicore fiber by receiving light emitted from a second light source toward the first multicore fiber and the second multicore fiber along a second direction intersecting the first direction; and a calculation unit that calculates an estimated loss from an image of the first multicore fiber and the second multicore fiber acquired by the first microscope and an image of the first multicore fiber and the second multicore fiber acquired by the second microscope.

### Brief Description of Drawings

[FIG. 1] FIG. 1 is a diagram illustrating a schematic configuration of a fusion splicing device according to an embodiment.
[FIG. 2] FIG. 2 is a diagram schematically illustrating a first multicore fiber and a second multicore fiber.
[FIG. 3] FIG. 3 is a diagram illustrating an observation mechanism for a multicore fiber in the fusion splicing device according to the embodiment.
[FIG. 4] FIG. 4 is a diagram illustrating an image of a multicore fiber obtained by a microscope of the fusion splicing device according to the embodiment.
[FIG. 5] FIG. 5 is a diagram for explaining an axial misalignment amount and an angular misalignment amount.
[FIG. 6] FIG. 6 is a diagram illustrating a light source, a multicore fiber, and a microscope in the observation mechanism illustrated in FIG. 3.
[FIG. 7] FIG. 7 is a view illustrating a state in which the multicore fiber is rotated and the microscope is moved in the observation mechanism illustrated in FIG. 3.
[FIG. 8] FIG. 8 is a flowchart illustrating an example of steps of a fusion splicing method according to an embodiment.

### Description of Embodiments

As a method for calculating an estimated loss of an optical fiber, a method has been known in which the optical fiber is observed from different directions by two microscopes to measure the positions of the cores and calculate the estimated loss. However, in a case where the optical fiber is a multicore fiber, when the optical fiber is observed by the microscopes, a plurality of cores of the optical fiber may overlap each other as viewed from the microscopes. In this case, it may not be possible to simultaneously observe the plurality of cores using the two microscopes. When the plurality of cores cannot be simultaneously observed by the two microscopes, the accuracy of calculating an estimated loss of the multicore fiber may decrease. Therefore, there is room for improvement in the accuracy of calculating the estimated loss in the multicore fiber.

An object of the present disclosure is to provide a fusion splicing device and a fusion splicing method capable of performing calculation of an estimated loss in a multicore fiber with high accuracy.

According to the present disclosure, the calculation of an estimated loss in the multicore fiber can be performed with high accuracy.

### [Description of Embodiment of the Present Invention]

First, embodiments of a fusion splicing device and a fusion splicing method according to the present disclosure will be listed and described. (1) A fusion splicing device according to one embodiment fusion-splices a first multicore fiber having a plurality of first cores exposed on a first end face and a second multicore fiber having a plurality of second cores exposed on a second end face to each other. The fusion splicing device includes a rotation mechanism for rotating the first multicore fiber and the second multicore fiber fusion-spliced to each other; a first microscope that observes the first multicore fiber and the second multicore fiber by receiving light emitted from a first light source toward the first multicore fiber and the second multicore fiber along a first direction; a second microscope that observes the first multicore fiber and the second multicore fiber by receiving light emitted from a second light source toward the first multicore fiber and the second multicore fiber along a second direction intersecting the first direction; and a calculation unit that calculates an estimated loss from an image of the first multicore fiber and the second multicore fiber acquired by the first microscope and an image of the first multicore fiber and the second multicore fiber acquired by the second microscope. The "image" includes not only an object formed as an image, but also data set including positional information, luminance information, color information, or the like serving as the basis for forming the image.

(6) A fusion splicing method according to one embodiment is a method for fusion-splicing a first multicore fiber having a plurality of first cores exposed on a first end face to a second multicore fiber having a plurality of second cores exposed on a second end face. The fusion splicing method includes a step of rotating the first multicore fiber and the second multicore fiber fusion-spliced to each other; a step of observing the first multicore fiber and the second multicore fiber using a first microscope by receiving light emitted toward the first multicore fiber and the second multicore fiber along a first direction; a step of observing the first multicore fiber and the second multicore fiber using a second microscope by receiving light emitted toward the first multicore fiber and the second multicore fiber along a second direction intersecting the first direction; and a step of calculating an estimated loss from an image of the first multicore fiber and the second multicore fiber acquired by the first microscope and an image of the first multicore fiber and the second multicore fiber acquired by the second microscope.

The fusion splicing device includes the rotation mechanism, the first microscope, the second microscope, and the calculation unit, and the fusion splicing method is performed using these components. The first microscope observes the first multicore fiber and the second multicore fiber fusion-spliced to each other by receiving the light emitted along the first direction, and the second microscope observes the first multicore fiber and the second multicore fiber fusion-spliced to each other by receiving the light emitted along the second direction. When the first multicore fiber and the second multicore fiber are observed by the first microscope and the second microscope, the first multicore fiber and the second multicore fiber can be rotated by the rotation mechanism. Therefore, observation of the first multicore fiber and the second multicore fiber can be performed in a state in which the first multicore fiber and the second multicore fiber are rotated to respective positions: a position where the first cores and the second cores can be detected as viewed from the first microscope and a position where the first cores and the second cores can be detected as viewed from the second microscope. Therefore, the calculation unit is capable of calculating the estimated loss with high accuracy from the image of the first multicore fiber and the second multicore fiber acquired by the first microscope and the image of the first multicore fiber and the second multicore fiber acquired by the second microscope.

(2) In (1) above, the rotation mechanism may rotate the first multicore fiber and the second multicore fiber until either the first microscope or the second microscope is capable of observing the plurality of first cores and the plurality of second cores. In this case, the estimated loss can be calculated with higher accuracy from the images of the first multicore fiber and the second multicore fiber.

(3) In (1) above, the rotation mechanism may rotate the first multicore fiber and the second multicore fiber until both the first microscope and the second microscope are capable of observing one first core and one second core. In this case, the estimated loss can be calculated with higher accuracy from the images of the first multicore fiber and the second multicore fiber.

(4) In any one of (1) to (3) above, the first microscope may acquire an image of the first multicore fiber or the second multicore fiber in a state in which a focus position is offset from a plane perpendicular to an optical axis of the first microscope and including a central axis of the first multicore fiber or the second multicore fiber. Alternatively, the second microscope may acquire an image of the first multicore fiber or the second multicore fiber in a state in which the focus position is offset from a plane perpendicular to an optical axis of the second microscope and including the central axis of the first multicore fiber or the second multicore fiber. In this case, the accuracy of specifying the positions of the first core and the second core in the acquired image is improved.

(5) In any one of (1) to (4) above, the calculation unit may calculate an estimated loss from an axial misalignment amount that is an amount of misalignment of an axis of each of the second cores with respect to an axis of the corresponding first core, an angular misalignment amount that is an amount of misalignment of an extending direction of the second core at the second end face with respect to an extending direction of the first core at the first end face, a mode field diameter of the first core, and a mode field diameter of the second core. In this case, the calculation of the estimated loss can be performed with higher accuracy.

### [Details of Embodiment of the Present Disclosure]

Specific examples of a fusion splicing device and a fusion splicing method according to an embodiment will be described. In the description of the drawings, the same or corresponding elements are denoted by the same reference signs, and duplicate descriptions will be omitted as appropriate. The drawings may be depicted in a partially simplified or exaggerated manner for ease of understanding, and dimensional ratios and the like are not limited to those illustrated in the drawings.

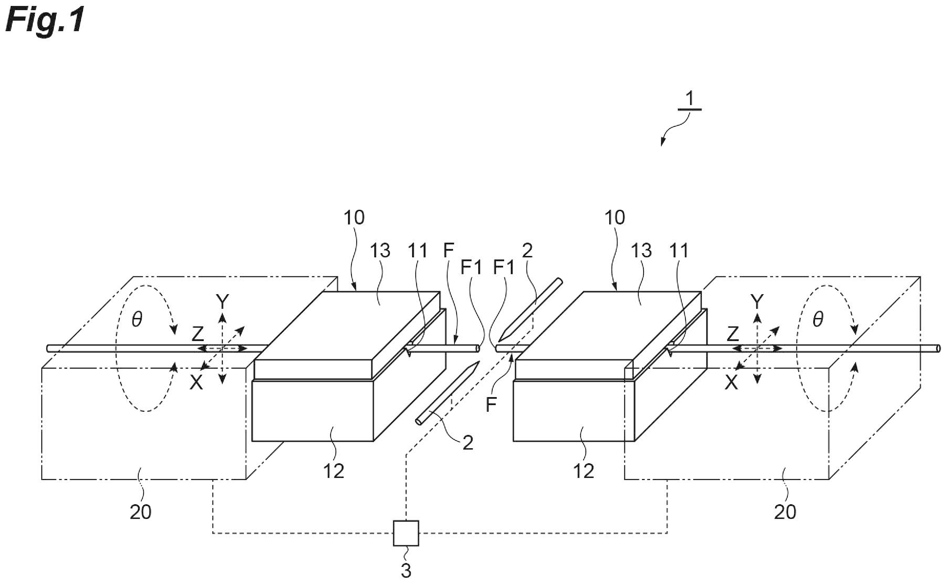

A configuration of the fusion splicing device according to the present embodiment will be described with reference to FIG. 1. FIG. 1 is a diagram for explaining an outline of a fusion splicing device 1 according to the present embodiment. As illustrated in FIG. 1, the fusion splicing device 1 fusion-splices a pair of optical fibers F to each other. The fusion splicing device 1 includes an optical fiber holder 10 having a V-groove 11, and a rotation mechanism 20 for rotating the optical fiber holder 10. The axes of the pair of optical fibers F coincide with each other. The term "axis" refers to a center line of the optical fiber that passes through the center of the optical fiber and extends along an extending direction of the optical fiber.

The optical fiber holder 10 and the rotation mechanism 20 are arranged along an axial direction that is a direction in which the axis of the optical fiber F extends. When an XYZ three-dimensional orthogonal coordinate system is set and the axis of the optical fiber F is taken as the Z-axis, the axial direction of the optical fiber F is the Z-axis direction. The fusion splicing device 1 includes a pair of the optical fiber holders 10 arranged along the Z-axis direction that is a direction in which each of the pair of optical fibers F extends, and a pair of the rotation mechanisms 20 arranged along the Z-axis direction.

The optical fiber F to be fusion-spliced is positioned in the V-groove 11 of each of the optical fiber holders 10. As one example, the optical fiber holder 10 is made of metal. The optical fiber holder 10 holds, for example, a portion of the optical fiber F where a coating is present. The optical fiber holder 10 holds the optical fiber F with an end face F1 of the optical fiber F protruding in the Z-axis direction. The rotation mechanism 20 is disposed on the side opposite to the end face F1 of the optical fiber F when viewed from the optical fiber holder 10.

A pair of discharge electrodes 2 are disposed at a position where the end faces F1 of the pair of optical fibers F face each other. The pair of discharge electrodes 2 are disposed at positions where the pair of discharge electrodes 2 face each other along a direction intersecting the optical fibers F (for example, the X-axis direction). Each of the optical fiber holders 10 includes, for example, a base 12 in which the V-groove 11 extending along the Z-axis direction is formed and on which the optical fiber F is placed, and a lid 13 placed on the base 12. For example, the base 12 and the lid 13 are disposed so as to be arranged along the Y-axis direction intersecting both the X-axis direction and the Z-axis direction.

The pair of discharge electrodes 2 fusion-splice the end faces F1 of the pair of optical fibers F by discharge. The fusion splicing device 1 includes a control unit 3 that controls each part of the fusion splicing device 1. The control unit 3 controls the discharge current and discharge time of the discharge electrodes 2, thereby performing fusion splicing under fusion conditions suitable for the type of the optical fibers F. In the fusion splicing device 1, alignment of the positions of the pair of optical fibers F is performed by the control unit 3.

The control unit 3 adjusts the position of each of the optical fibers F in the X-axis direction and the Y-axis direction, and performs axial alignment of the pair of optical fibers F such that the pair of optical fibers F are arranged in a straight line along the Z-axis direction. The control unit 3 performs alignment of the pair of optical fibers F in the X-axis direction, the Y-axis direction, and the Z-axis direction. The control unit 3 performs alignment in a θ-direction by controlling the rotation mechanism 20 to rotate the optical fiber F about the axis (the same as the Z-axis in the figure) of the optical fiber F.

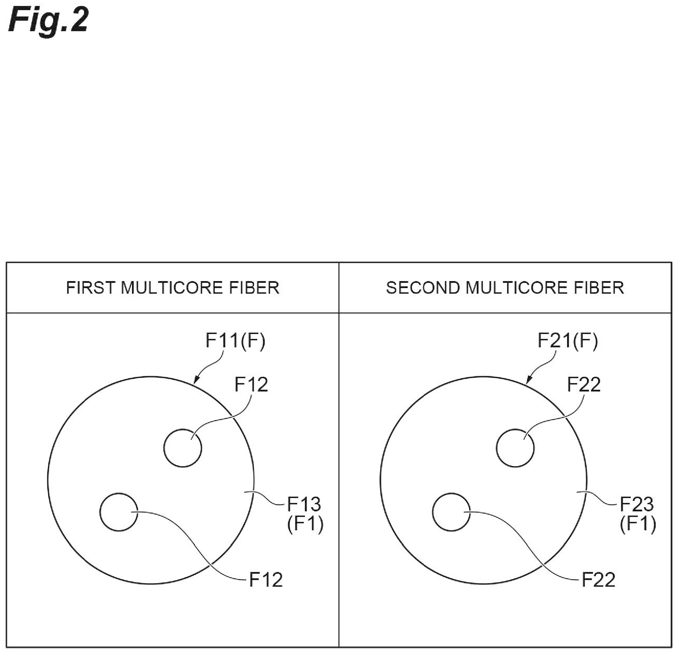

The optical fiber F is a multicore fiber. The multicore fiber is an optical fiber in which the positions of cores, a cladding, and a marker in the θO-direction need to coincide with those of a multicore fiber to be spliced. FIG. 2 illustrates an example of the optical fibers F that are fusion-spliced in the fusion splicing device 1. As illustrated in FIG. 2, the optical fiber F includes a first multicore fiber F11 and a second multicore fiber F21, and the fusion splicing device 1 fusion-splices the first multicore fiber F11 to the second multicore fiber F21.

The first multicore fiber F11 has a plurality of first cores F12 exposed on a first end face F13, and the second multicore fiber F21 has a plurality of second cores F22 exposed on a second end face F23. Hereinafter, unless it is necessary to distinguish between the first multicore fiber F11 and the second multicore fiber F21, the first multicore fiber F11 and the second multicore fiber F21 may be collectively referred to as the optical fiber F.

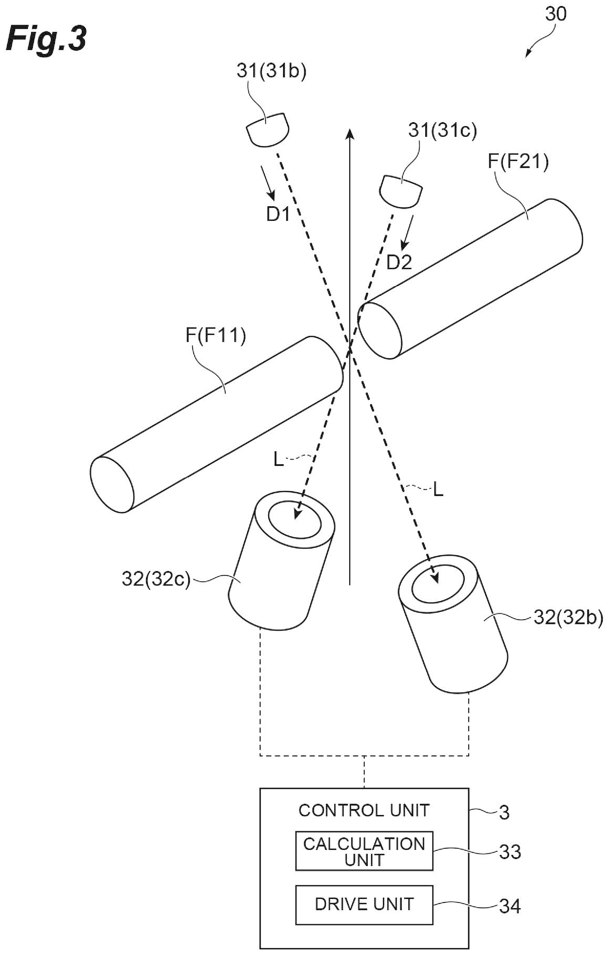

The fusion splicing device 1 includes an observation mechanism for observing the pair of optical fibers F. FIG. 3 is a diagram illustrating an observation mechanism 30 that is one example of the observation mechanism of the fusion splicing device 1. The observation mechanism 30 includes a light source 31 and a microscope 32. The light source 31 includes a first light source 31b and a second light source 31c, and the microscope 32 includes a first microscope 32b and a second microscope 32c.

The first light source 31b is, for example, a light-emitting element such as a light-emitting diode. As one example, the first light source 31b emits light L as red light. The first microscope 32b includes, for example, an observation lens and an image sensor. For example, the first microscope 32b is a charge-coupled device camera (CCD camera), a complementary metal oxide semiconductor camera (CMOS camera), or the like.

For example, the position of the first microscope 32b is variable. An observation result obtained by the first microscope 32b is acquired, for example, as luminance information of the light L. The luminance information of the light L acquired by the first microscope 32b is output to the control unit 3. For example, the function and configuration of the second light source 31c are the same as the function and configuration of the first light source 31b, and the function and configuration of the second microscope 32c are the same as the function and configuration of the first microscope 32b.

The first light source 31b and the first microscope 32b are arranged along a first direction D1 with the optical fiber F interposed therebetween. The second light source 31c and the second microscope 32c are arranged along a second direction D2 intersecting the first direction D1, with the optical fiber F interposed therebetween. An angle formed between the first direction D1 and the second direction D2 is, for example, greater than 0° and less than 180°, and may be 60° or more and 120° or less (as one example, 90°). The first light source 31b emits the light L toward the first multicore fiber F11 and the second multicore fiber F21 along the first direction D1. The second light source 31c emits the light L toward the first multicore fiber F11 and the second multicore fiber F21 along the second direction D2.

The first microscope 32b observes the first multicore fiber F11 and the second multicore fiber F21 by receiving the light L emitted from the first light source 31b toward the first multicore fiber F11 and the second multicore fiber F21. The second microscope 32c observes the first multicore fiber F11 and the second multicore fiber F21 by receiving the light L emitted from the second light source 31c toward the first multicore fiber F11 and the second multicore fiber F21. The rotation mechanism 20 described above rotates the first multicore fiber F11 and the second multicore fiber F21 until both the first microscope 32b and the second microscope 32c are capable of observing the plurality of first cores F12 and the plurality of second cores F22.

The first microscope 32b acquires an image of the first multicore fiber F11 and the second multicore fiber F21. For example, the first microscope 32b receives the light L, which passes through the first multicore fiber F11 and the second multicore fiber F21, to obtain luminance information of the first multicore fiber F11 and the second multicore fiber F21.

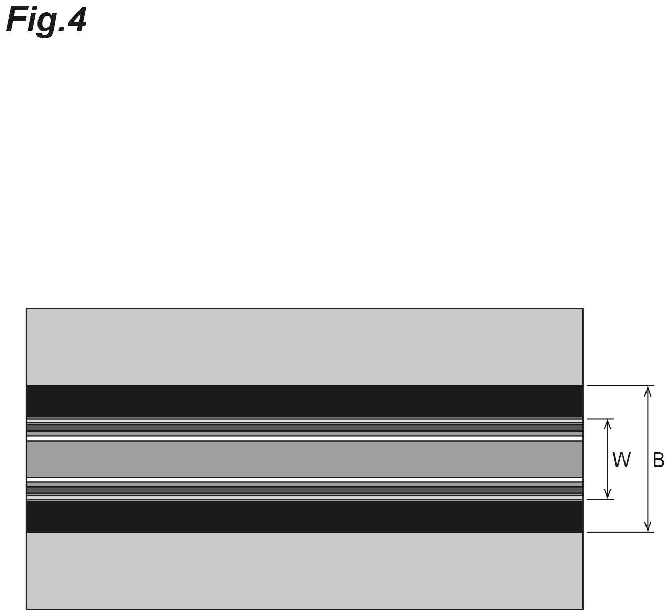

FIG. 4 illustrates an example of a side observation image obtained by the first microscope 32b. As illustrated in FIG. 4, the outer diameter B of the cladding of the optical fiber F and a region W in which the light L is focused by the cladding of the optical fiber F are shown in the side observation image. The acquisition of an image by the second microscope 32c is performed in the same manner as the acquisition of an image by the first microscope 32b.

As illustrated in FIG. 3, the control unit 3 includes, for example, a calculation unit 33 that calculates an estimated loss of the optical fiber F, and a drive unit 34 that moves the first microscope 32b and the second microscope 32c. The estimated loss of the optical fiber F refers to, for example, an estimated value of a splice loss occurring between the first multicore fiber F11 and the second multicore fiber F21. The calculation unit 33 calculates the estimated loss from the image of the first multicore fiber F11 and the second multicore fiber F21 acquired by the first microscope 32b and the image of the first multicore fiber F11 and the second multicore fiber F21 acquired by the second microscope 32c.

For example, each of the first microscope 32b and the second microscope 32c acquires an image of the first multicore fiber F11 and the second multicore fiber F21 after fusion splicing. If an image including a fusion-spliced portion between the first multicore fiber F11 and the second multicore fiber F21 in the vicinity of a central portion of the image is acquired, an image of both the first multicore fiber F11 and the second multicore fiber F21 can be acquired at once using one microscope. At this time, the calculation unit 33 calculates the estimated loss from the images of the first multicore fiber F11 and the second multicore fiber F21 fusion-spliced to each other.

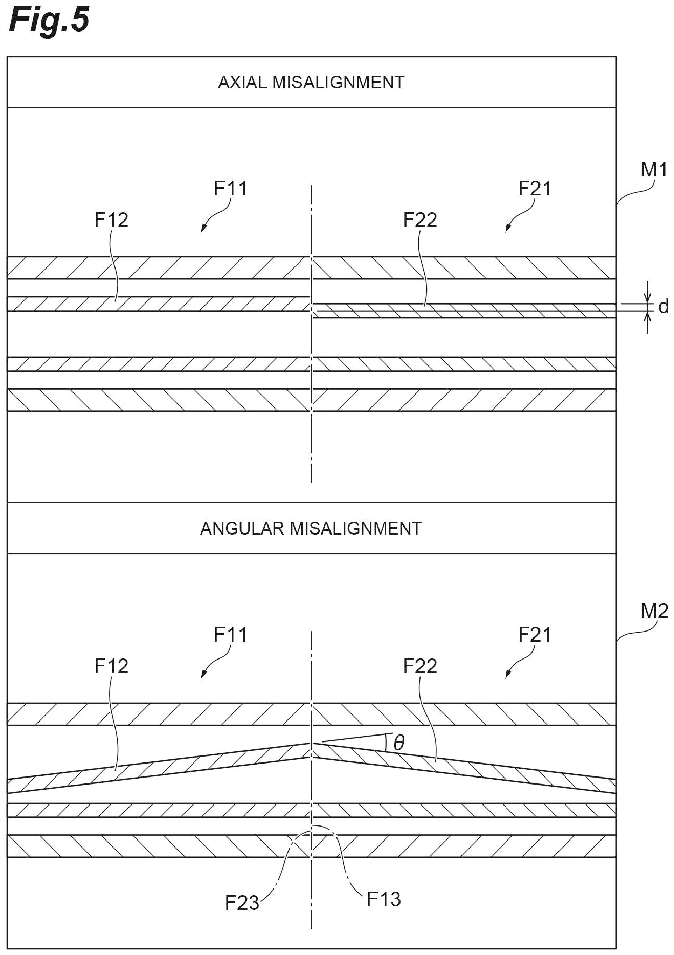

As illustrated in FIG. 5, the calculation unit 33 calculates an estimated loss for each core from an image M1 acquired by the first microscope 32b and an image M2 acquired by the second microscope 32c, based on an axial misalignment amount d and an angular misalignment amount θ between the first multicore fiber F11 and the second multicore fiber F21, the mode field diameter of the first core F12, and the mode field diameter of the second core F22. The axial misalignment amount d represents an amount of misalignment of the axis of the second core F22 with respect to the axis of the first core F12. The angular misalignment amount θ is an amount of misalignment of an extending direction of the second core F22 at the second end face F23 with respect to an extending direction of the first core F12 at the first end face F13.

For example, the calculation unit 33 calculates an estimated loss of the first multicore fiber F11 and the second multicore fiber F21 from the axial misalignment amount d, the angular misalignment amount θ, and a mode field diameter (MFD) mismatch. In this case, the calculation unit 33 calculates the estimated loss, for example, using Marcuse's equation disclosed in Non-Patent Literature 1 described above. The mode field diameter mismatch represents, for example, a difference between the mode field diameter of the first multicore fiber F11 and the mode field diameter of the second multicore fiber F21.

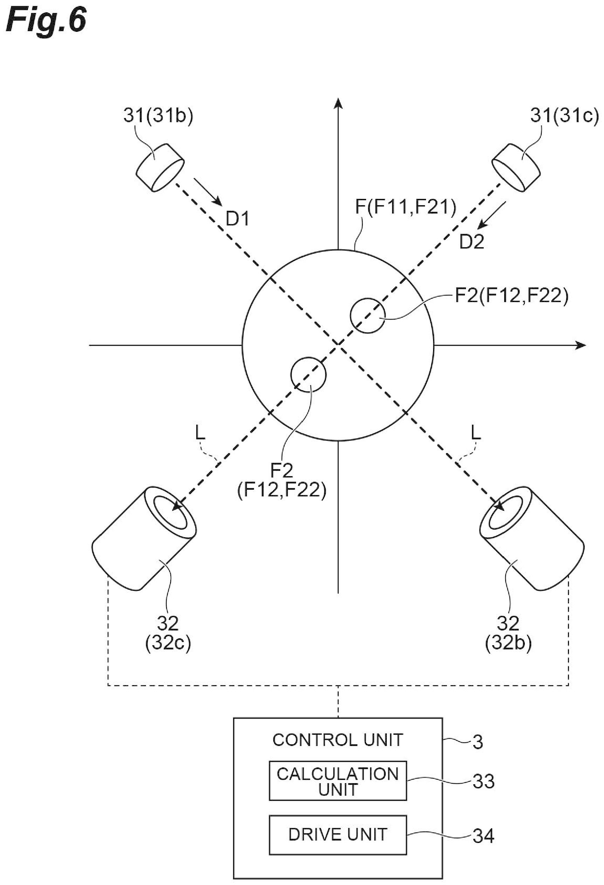

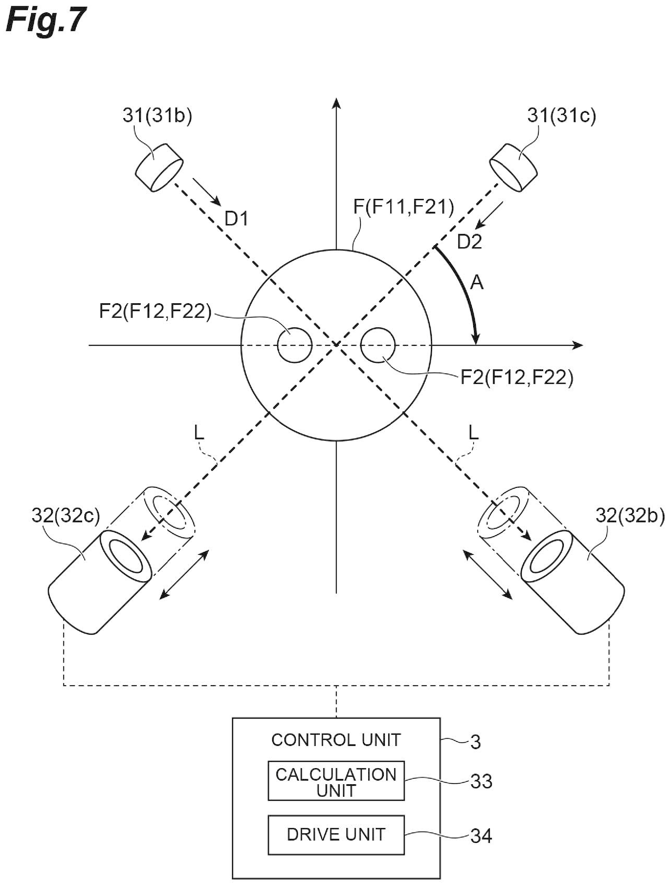

The acquisition of an image of the optical fiber F and the calculation of an estimated loss will be described in more detail with reference to FIGS. 6 and 7. Hereinafter, unless it is necessary to distinguish between the first core F12 and the second core F22, the first core F12 and the second core F22 may be collectively referred to as a core F2. For example, as illustrated in FIG. 6, when two cores F2 overlap each other on the optical path of the light L from the second light source 31c, it may become difficult to simultaneously observe the two cores F2 using the first microscope 32b or the second microscope 32c. The phrase "two cores overlap each other on an optical path" indicates, for example, that at least a portion of the two cores is arranged along the optical path of light from a light source.

As illustrated in FIG. 7, the rotation mechanism 20 rotates the optical fiber F to a position where each of the first microscope 32b and the second microscope 32c is capable of observing the two cores F2. It should be noted that the rotation mechanism 20 may not rotate the optical fiber F to a position where the first microscope 32b and the second microscope 32c are capable of simultaneously observing the two cores F2. The rotation mechanism 20 may rotate the optical fiber F to respective rotation positions: a rotation position where the first microscope 32b is capable of observing the two cores F2 and a rotation position where the second microscope 32c is capable of observing the two cores F2.

Alternatively, the rotation mechanism 20 may rotate the optical fiber F to respective positions: a rotation position where the first microscope 32b is capable of observing the first core of the two cores F2, a rotation position where the first microscope 32b is capable of observing the second core of the two cores F2, a rotation position where the second microscope 32c is capable of observing the first core of the two cores F2, and a rotation position where the second microscope 32c is capable of observing the second core of the two cores F2. The rotation mechanism 20 may rotate the optical fiber F at fixed angular intervals, or may rotate the optical fiber F until the optical fiber F reaches an angle at which the cores F2 are most easily visible. For example, in the example of FIG. 7, the rotation mechanism 20 rotates the optical fiber F by an angle A in the θ-direction until the optical fiber F reaches a position where the two cores F2 do not overlap each other on the optical path of the light L from the first light source 31b and the two cores F2 do not overlap each other on the optical path of the light L from the second light source 31c.

The value of the angle A may be stored in advance. In addition, the value of the angle A may be changed for each acquisition of images by the first microscope 32b and the second microscope 32c. The angle A is, for example, 40° or more and 50° or less. However, the value of the angle A is not particularly limited. By rotating the optical fiber F as described above, both the first microscope 32b and the second microscope 32c are allowed to observe the two cores F2 spaced apart from each other.

It should be noted that the position for observing the cores F2 may not be a position where the two cores F2 do not overlap each other at all. The position for observing the cores F2 only needs to be a rotation position where one core F2 can be detected. It is sufficient if images can be eventually acquired for all or a specific number of the first cores F12 and the second cores F22 by the first microscope 32b and the second microscope 32c by repeating image acquisition, detection confirmation, and changes in rotation position. The "specific number of cores" refers to, for example, the required number of cores to calculate the worst value or the average value of an estimated loss for all or some of the cores. The "specific number of cores" refers to, for example, "a majority of the total number of cores included in a single multicore fiber". Alternatively, the "specific number of cores" refers to "the cores having the worst linearity in the vicinity of the fusion-spliced portion among all the cores". An "approximately half of the total number of cores included in a single multicore fiber may be detected by the first microscope 32b, and the other cores may be detected by the second microscope 32c".

The drive unit 34 moves the first microscope 32b and the second microscope 32c, for example, by outputting a drive signal to each of the first microscope 32b and the second microscope 32c. The drive unit 34 moves the first microscope 32b along the first direction D1, and moves the second microscope 32c along the second direction D2. For example, the drive unit 34 moves each of the first microscope 32b and the second microscope 32c in a direction toward the optical fiber F or in a direction away from the optical fiber F. The drive unit 34 moves each of the first microscope 32b and the second microscope 32c such that a focus position is aligned with a plane perpendicular to the optical axis of each of the first microscope 32b and the second microscope 32c and including the central axis of the optical fiber F. In this state, each of the first microscope 32b and the second microscope 32c acquires an image.

At this time, the cores F2 may not be detected in the acquired image, and in this case, the calculation of the estimated loss by the calculation unit 33 may be affected. Therefore, the drive unit 34 moves each of the first microscope 32b and the second microscope 32c such that the focus position is set to a position offset from a plane perpendicular to the optical axis of each of the microscopes and including the central axis of the optical fiber F.

For example, the drive unit 34 moves the first microscope 32b and the second microscope 32c away from the optical fiber F by N µm (N is a real number) from a position where the focus position coincides with a plane perpendicular to the optical axis of each of the microscope and including the central axis of the optical fiber F. The value of N may be stored in advance. The value of N may be changed for each acquisition of images by the first microscope 32b and the second microscope 32c. The drive unit 34 may move the first microscope 32b and the second microscope 32c toward the optical fiber F. N is represented by a positive value when the first microscope 32b and the second microscope 32c are moved away from the optical fiber F, and N is represented by a negative value when the first microscope 32b and the second microscope 32c are moved toward the optical fiber F.

When the cladding outer diameter of the optical fiber F is B µm (see FIG. 4), the absolute value of N is, as one example, greater than 0 and equal to or less than B, and may be greater than 0 and equal to or less than 65. The value of N may be a value at which an inside-to-outside ratio obtained from the region W in which light is focused by the cladding of the optical fiber F is 20% or more and 80% or less. The inside-to-outside ratio is obtained as a value of 100 × W/B. The first microscope 32b and the second microscope 32c acquire images of the optical fiber F in a state in which the focus position is offset from a plane perpendicular to the optical axis of each of the microscope and including the central axis of the optical fiber F. Accordingly, images of the cores F2 can be more clearly acquired.

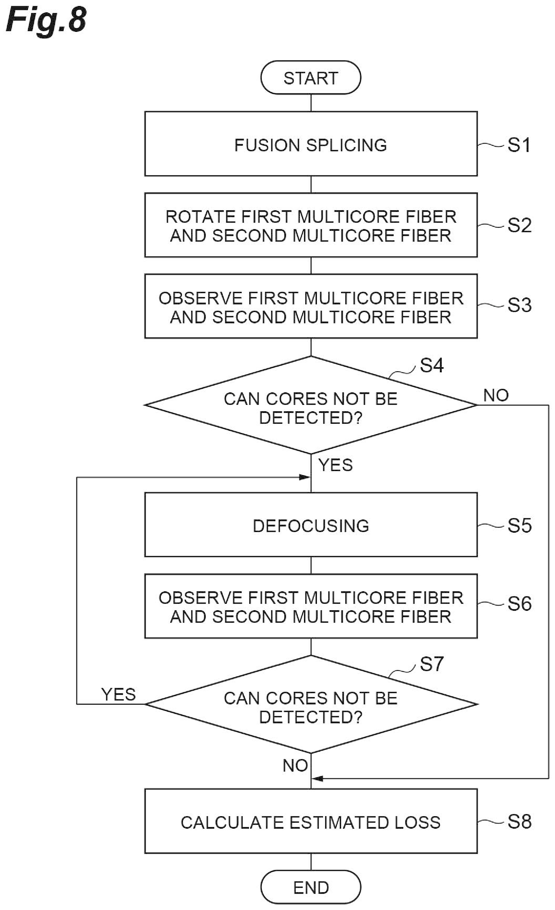

The fusion splicing method according to the present embodiment will be described with reference to FIG. 8. FIG. 8 is a flowchart illustrating an example of steps of the fusion splicing method according to the embodiment. Hereinafter, an example of a method for performing fusion splicing using the fusion splicing device 1 and performing calculation of an estimated loss will be described. First, the end faces F1 of the pair of optical fibers F are disposed to face each other. The first end face F13 of the first multicore fiber F11 is disposed to face the second end face F23 of the second multicore fiber F21.

Then, the rotation mechanism 20 performs rotational alignment by rotating at least one of the first multicore fiber F11 and the first cores F12 in the θ-direction. In the rotational alignment, the positions of the plurality of first cores F12 of the first multicore fiber F11 in the θ-direction are aligned with the positions of the plurality of second cores F22 of the second multicore fiber F21 in the θ-direction. Then, the discharge electrodes 2 fusion-splice the first end face F13 of the first multicore fiber F11 to the second end face F23 of the second multicore fiber F21 (a step of performing fusion splicing, step S1).

Next, the first multicore fiber F11 and the second multicore fiber F21 are rotated (a step of rotating, step S2). As described above, the rotation mechanism 20 rotates the first multicore fiber F11 and the second multicore fiber F21 until both the first microscope 32b and the second microscope 32c are capable of observing two cores F2.

After the first multicore fiber F11 and the second multicore fiber F21 are rotated, each of the first microscope 32b and the second microscope 32c observes the first multicore fiber F11 and the second multicore fiber F21, and acquires an image (a step of performing observation using the first microscope and a step of performing observation using the second microscope, step S3).

The image of the first multicore fiber F11 and the second multicore fiber F21 acquired by the first microscope 32b, and the image of the first multicore fiber F11 and the second multicore fiber F21 acquired by the second microscope 32c are output to the control unit 3. For example, the control unit 3 determines whether the first core F12 and the second core F22 cannot be detected in the images output to the control unit 3 (a step of determining whether no detection can be made, step S4). Whether no detection can be made can be determined, for example, based on the luminance information in the images.

When the control unit 3 determines that both the first core F12 and the second core F22 can be detected, the process proceeds to step S8. On the other hand, when the control unit 3 determines that either the first core F12 or the second core F22 cannot be detected, the control unit 3 performs defocusing of the first microscope 32b and the second microscope 32c (a step of performing defocusing, step S5). At this time, the drive unit 34 moves the first microscope 32b or the second microscope 32c such that the focus position is set to a position offset from a plane perpendicular to the optical axis of the first microscope 32b or the second microscope 32c and including the central axis of the optical fiber F. Then, the first microscope 32b and the second microscope 32c observe the first multicore fiber F11 and the second multicore fiber F21 to acquire images (a step of performing observation using the first microscope and a step of performing observation using the second microscope, step S6). Thereafter, the process proceeds to step S7, and it is determined whether the first core F12 and the second core F22 cannot be detected. When either the first core F12 or the second core F22 cannot be detected, the process proceeds to step S5. These steps are repeated the necessary number of times until it is determined that both the first core F12 and the second core F22 can be detected. Then, when it is determined that both the first core F12 and the second core F22 can be detected, the process proceeds to step S8.

In step S8, the calculation unit 33 calculates an estimated loss from the image of the first multicore fiber F11 and the second multicore fiber F21 acquired by the first microscope 32b and the image of the first multicore fiber F11 and the second multicore fiber F21 acquired by the second microscope 32c (a step of calculating an estimated loss). For example, the calculation unit 33 calculates the estimated loss from the axial misalignment amount d and the angular misalignment amount θ between the first multicore fiber F11 and the second multicore fiber F21, the mode field diameter of the first core F12, and the mode field diameter of the second core F22. Thereafter, the series of steps are completed.

Next, effects obtained from the fusion splicing device 1 and the fusion splicing method according to the present embodiment will be described. According to the present embodiment, the fusion splicing device 1 includes the rotation mechanism 20, the first microscope 32b, the second microscope 32c, and the calculation unit 33, and the fusion splicing method is performed using these components. The first microscope 32b observes the first multicore fiber F11 and the second multicore fiber F21 fusion-spliced to each other by receiving the light L emitted along the first direction D1, and the second microscope 32c observes the first multicore fiber F11 and the second multicore fiber F21 fusion-spliced to each other by receiving the light L emitted along the second direction D2. When the first multicore fiber F11 and the second multicore fiber F21 are observed by the first microscope 32b and the second microscope 32c, the first multicore fiber F11 and the second multicore fiber F21 can be rotated by the rotation mechanism 20.

Therefore, observation of the first multicore fiber F11 and the second multicore fiber F21 can be performed in a state in which the first multicore fiber F11 and the second multicore fiber F21 are rotated to positions where the first cores F12 and the second cores F22 can be detected as viewed from the first microscope 32b and the first cores F12 and the second cores F22 can be detected as viewed from the second microscope 32c. Therefore, the calculation unit 33 is capable of calculating the estimated loss with high accuracy from the image of the first multicore fiber F11 and the second multicore fiber F21 acquired by the first microscope 32b and the image of the first multicore fiber F11 and the second multicore fiber F21 acquired by the second microscope 32c.

As described above, the rotation mechanism 20 may rotate the first multicore fiber F11 and the second multicore fiber F21 until either the first microscope 32b or the second microscope 32c is capable of observing the plurality of first cores F12 and the plurality of second cores F22. In this case, the estimated loss can be calculated with higher accuracy from the images of the first multicore fiber F11 and the second multicore fiber F21.

As described above, the rotation mechanism 20 may rotate the first multicore fiber F11 and the second multicore fiber F21 until both the first microscope 32b and the second microscope 32c are capable of observing one first core F12 and one second core F22. In this case, the estimated loss can be calculated with higher accuracy from the images of the first multicore fiber F11 and the second multicore fiber F21.

As described above, the first microscope 32b may acquire an image of the first multicore fiber F11 or the second multicore fiber F21 in a state in which the focus position is offset from a plane perpendicular to the optical axis of the first microscope 32b and including the central axis of the first multicore fiber F11 or the second multicore fiber F21. Alternatively, the second microscope 32c may acquire an image of the first multicore fiber F11 or the second multicore fiber F21 in a state in which the focus position is offset from a plane perpendicular to the optical axis of the second microscope 32c and including the central axis of the first multicore fiber F11 or the second multicore fiber F21. In this case, an image of the first core F12 and the second core F22 can be more clearly acquired. As a result, the accuracy of specifying the positions of the first core and the second core in the acquired image is improved.

As described above, the calculation unit 33 may calculate the estimated loss from the axial misalignment amount d that is an amount of misalignment of the axis of each of the second cores F22 with respect to the axis of the corresponding first core F12, the angular misalignment amount θ that is an amount of misalignment of the extending direction of the second core F22 at the second end face F23 with respect to the extending direction of the first core F12 at the first end face F13, the mode field diameter of the first core F12, and the mode field diameter of the second core F22. In this case, the calculation of the estimated loss can be performed with higher accuracy.

The embodiments of the fusion splicing device and the fusion splicing method according to the present disclosure have been described above. However, the present invention is not limited to the embodiments described above. That is, it will be easily understood by those skilled in the art that various modifications and changes can be made to the present invention within the scope of the concept described in the claims. The configurations of the respective parts of the fusion splicing device and the steps of the fusion splicing method can be changed as appropriate within the scope of the concept. That is, the configurations, shapes, sizes, numbers, materials, and modes of disposition of the respective parts of the fusion splicing device, as well as the contents and order of the steps of the fusion splicing method can be changed as appropriate within the scope of the concept.

For example, in the embodiments described above, an example has been described in which defocusing is performed by moving each of the first microscope 32b and the second microscope 32c such that the focus position is set to a position offset from a plane perpendicular to the optical axis of the first microscope 32b or the second microscope 32c and including the central axis of the optical fiber F. However, defocusing may not be performed. In this case, the time required for fusion splicing can be further reduced.

In the embodiments described above, an example has been described in which the first multicore fiber F11 having two first cores F12 is fusion-spliced to the second multicore fiber F21 having two second cores F22. However, the number of cores in the first multicore fiber and the second multicore fiber may be three or more, and can be changed as appropriate.

### Reference Signs List

1: fusion splicing device, 2: discharge electrode, 3: control unit, 10: optical fiber holder, 11: V-groove, 12: base, 13: lid, 20: rotation mechanism, 30: observation mechanism, 31: light source, 31b: first light source, 31c: second light source, 32: microscope, 32b: first microscope, 32c: second microscope, 33: calculation unit, 34: drive unit, A: angle, F: optical fiber, F1: end face, F2: core, F11: first multicore fiber, F12: first core, F13: first end face, F21: second multicore fiber, F22: second core, F23: second end face, L: light, M1, M2: image.

## Claims

1. A fusion splicing device that fusion-splices a first multicore fiber having a plurality of first cores exposed on a first end face and a second multicore fiber having a plurality of second cores exposed on a second end face to each other, the fusion splicing device comprising:
a rotation mechanism for rotating the first multicore fiber and the second multicore fiber fusion-spliced to each other;
a first microscope that observes the first multicore fiber and the second multicore fiber by receiving light emitted from a first light source toward the first multicore fiber and the second multicore fiber along a first direction;
a second microscope that observes the first multicore fiber and the second multicore fiber by receiving light emitted from a second light source toward the first multicore fiber and the second multicore fiber along a second direction intersecting the first direction; and
a calculation unit that calculates an estimated loss from an image of the first multicore fiber and the second multicore fiber acquired by the first microscope and an image of the first multicore fiber and the second multicore fiber acquired by the second microscope.

2. The fusion splicing device according to claim 1,
wherein the rotation mechanism rotates the first multicore fiber and the second multicore fiber until either the first microscope or the second microscope is capable of observing the plurality of first cores and the plurality of second cores.

3. The fusion splicing device according to claim 1,
wherein the rotation mechanism rotates the first multicore fiber and the second multicore fiber until both the first microscope and the second microscope are capable of observing one first core and one second core.

4. The fusion splicing device according to claim 1 or 2,
wherein the first microscope acquires an image of the first multicore fiber or the second multicore fiber in a state in which a focus position is offset from a plane perpendicular to an optical axis of the first microscope and including a central axis of the first multicore fiber or the second multicore fiber, or
the second microscope acquires an image of the first multicore fiber or the second multicore fiber in a state in which the focus position is offset from a plane perpendicular to an optical axis of the second microscope and including the central axis of the first multicore fiber or the second multicore fiber.

5. The fusion splicing device according to claim 1 or 2,
wherein the calculation unit calculates an estimated loss from an axial misalignment amount that is an amount of misalignment of an axis of each of the second cores with respect to an axis of the corresponding first core,
an angular misalignment amount that is an amount of misalignment of an extending direction of the second core at the second end face with respect to an extending direction of the first core at the first end face,
a mode field diameter of the first core, and
a mode field diameter of the second core.

6. A fusion splicing method for fusion-splicing a first multicore fiber having a plurality of first cores exposed on a first end face to a second multicore fiber having a plurality of second cores exposed on a second end face, the method comprising:
a step of rotating the first multicore fiber and the second multicore fiber fusion-spliced to each other;
a step of observing the first multicore fiber and the second multicore fiber using a first microscope by receiving light emitted toward the first multicore fiber and the second multicore fiber along a first direction;
a step of observing the first multicore fiber and the second multicore fiber using a second microscope by receiving light emitted toward the first multicore fiber and the second multicore fiber along a second direction intersecting the first direction; and
a step of calculating an estimated loss from an image of the first multicore fiber and the second multicore fiber acquired by the first microscope and an image of the first multicore fiber and the second multicore fiber acquired by the second microscope.
